# EUROPEAN PATENT APPLICATION

(11) **EP 1 336 713 A2**
(43) Date of publication of application: **20.08.2003**
(21) Application number: 03003615.6
(22) Date of filing: 17.02.2003
(51) Int. Cl.: E06B 5/16, E04B 1/94

(54) **Fire protection means**

(30) Priority: 19.02.2002 DE 10206899
(71) Applicant: ISOVER SAINT-GOBAIN, 92400 Courbevoie (FR)
(72) Inventor: Becker, Michael, 67374 Hanhofen (DE); Keller, Horst, 69259 Wilhelmsfeld (DE); Bihy, Lothar, 67657 Kaiserlautern (DE)
(74) Representative: Kuhnen & Wacker

(57) **Abstract**

The invention relates to a fire protection means (1), in particular a fireproof door, a wall element for a fire protection closet or the like, which includes a frame (2) and a lining of mineral wool received therein, and a substance (5) which splits off water under the influence of heat. Herein the mineral wool is provided in the form of a granulate (4). Moreover a displacement of the mineral wool granulate (4) settling inside the frame (2) in accordance with gravity is counteracted, in that a supporting structure is provided and/or that the mineral wool granulate (4) is introduced under pressure and/or that an additional binder is introduced into the mineral wool granulate (4). The inventive fire protection means (1) thus satisfies any requirements in terms of fire protection; it may economically be produced irrespective of its concrete configuration, and it may also be manufactured in locations that are far from the production facilities for the mineral wool.

## Description

The invention relates to fire protection means, in particular a fireproof door, a wall element for a fire protection closet or the like, which includes a frame and a lining of mineral wool accommodated therein, and a substance that splits off water under the influence of heat.

The purpose of such fire protection means is to isolate facilities from each other in terms of fire protection so as to prevent a fire from spreading or at least delay it. They are standardized in accordance with DIN 4102 and rated by fire resistance classes. One example for such a fire protection means is disclosed in DE 199 52 931 A1 relating, in particular, to linings for a fireproof door or the like. Such a fire protection element serving as a lining comprises, e.g., a layer of plaster or gypsum to which a mineral wool layer provided with fireproofing properties is associated on one or both sides. To this end, a substance which splits off water under the influence of heat such as, for example, a hydroxide that is integrated between the bonded mineral wool fibers, is arranged in the mineral wool layer in at least one discrete layer. A like fire protection element may be furnished at low cost inasmuch as both the plasterboard and the at least one mineral wool layer may be manufactured at relatively low expense. This known fire protection element is moreover characterized by long useful lifetimes, i.e., a comparatively low temperature increase on the cold side, which in particular is brought about by the influence of the at least one discrete hydroxide layer in the mineral wool product in cooperation with the gypsum layer, with the latter moreover producing the necessary inherent stability of the lining. This product has therefore found excellent acceptance in practical use.

However due to the fact that such fireproof linings are utilized for fire protection means in most variegated formats, they necessitate costly storage that implies corresponding logistics and/or expensive adaptation such as, e.g., cutting to the respective shape of the fire protection means in the course of installation. This is found to be a drawback in practical use.

The invention is therefore based on the object of providing a fire protection means which satisfies the requirements of DIN 4102 and at the same time may be manufactured at a low cost and with little complexity of manufacture, regardless of the respective development of the fire protection means.

This object is achieved through a fire protection means having the features of claim 1.

The invention thus for the first time departs from the basic principle applied in previous fire protection elements, of forming a dimensionally stable insert such as a panel, a pipe segment or the like, and inserting it into the frame of the fire protection means. Instead, loose, granulate-type mineral wool, in particular rock wool, is introduced into the frame of the fire protection means, whereby it is advantageously possible to automatically achieve an adaptation to the configuration of the fire protection means, for the granulate penetrates into every region of the cavity in the frame.

In particular it was found here in the framework of the invention that the problem of such "bulk packings" as regards deficient dimensional stability, in particular under the influence of heat, may be remedied by measures that are technically relatively simple, so that the like mineral wool granulates are surprisingly nevertheless suited for fire protection means. To this end, according to the invention a displacement of the mineral wool settling inside the frame of the fire protection means in accordance with gravity is reliably counteracted by providing a supporting structure and/or by introducing the mineral wool granulate under pressure and/or by adding additional binder to the mineral wool granulate. These measures make it possible - singly and to an even better degree in combination - to ensure that the mineral wool granulate will not collapse and leave the upper regions of the fire protection means unprotected in the event of a fire.

Thus it is possible with the inventive fire protection means to satisfy any requirements made to such products in practical use, and for example also to attain fire classifications F 30 and F 60 in accordance with DIN 4102 Part 5.

One essential advantage of the invention resides in the fact that it thus is not necessary to prepare and store any pre-fabricated fireproof linings, so that the expense for storage, logistics, and also for processing may clearly be reduced in comparison with the prior art. In addition, die introduction of the mineral wool granulate into the frame of the fire protection means may be mastered well and automated regardless of its respective configuration, resulting in particularly low expense for installation. The fire protection means in accordance with the invention may thus be manufactured economically.

It is moreover advantageous that production of the inventive fire protection means is not tied to the mineral wool production facilities but enjoys freedom in terms as regards location. Thus it is, for instance, also possible to deliver the mineral wool granulate and the substance that splits off water under the influence of heat to the location of production of the frame of such fire protection means to complete manufacture there.

In addition, the invention permits to a much larger extent the use of recycled wool, for the latter will frequently already exist in the form of a granulate, or else may be transformed into this shape with little technical complexity, and thus simply is admixed.

Advantageous developments of the invention are the subject matters of the subclaims.

Thus the supporting structure may have the form of a honeycomb structure, as a result of which a high stability of the supporting structure at a relatively low weight may be achieved with little complexity in terms of construction. At the same time, a honeycomb structure moreover takes very little space so that it only slightly impairs the fireproofing properties of the inventive fire protection means. It was moreover found that a like honeycomb structure ensures with high reliability, even under the influence of temperature, that the mineral wool granulate will not collapse and thereby leave the upper ranges of the fire protection means unprotected.

As it were, the use of honeycomb structures fundamentally is already known from the field of thermal insulation, as is documented by EP 0 420 750 B1; however the honeycomb structure in this prior art has the purpose of establishing a transverse bracing with particularly high mechanical strength between the cover panels of a large-format composite board. This is certainly necessary, for this composite board is to be installed for insulation purposes in garret storeys of residential buildings, wherein corresponding pressure loads on the major surfaces of the composite board may be caused by the roofing or when the roof is walked on. Moreover the mineral wool flakes that are introduced into the honeycomb structure are optimized with a view to the desired thermal insulation effect as regards their properties, while no hint whatsoever is found in this prior art to add a substance that splits off water under the influence of heat to the mineral wool flakes. Rather, this prior art intends to combine the honeycomb structure with the cover panels by providing the latter with a full-surface adhesive coating of polyurethane or the like; nevertheless such an adhesive is flammable, and this known composite board thus not being suited for the fire protection sought in the framework of the invention.

In the fire protection means of the invention, the honeycomb structure may furthermore be formed of a fireproof and water-repellent paperboard, with better fire resistance classifications being achievable as a result. Herefor the honeycomb structure may be provided, e.g., with water glass, silica sol, phosphates, or other known fireproof coatings, so that it will not catch on fire as a result of the influence of heat. Thanks to the water-repellent property of the honeycomb structure, it is moreover achieved that the latter maintains its stability even when the water-releasing substance precipitates water as a result of the influence of heat.

It is furthermore advantageous if the additionally introduced binder is a non-flammable binder, such as preferably water glass, silica sol and/or magnesia binder. In such a case it is possible to achieve an even better fire classification with the inventive fire protection means, for flammable means are thus not utilized for enhancing the inherent stability of the fireproof lining. In addition water glass, for example, also splits off water under the influence of temperature, whereby the fireproofing properties of the inventive fire protection means are improved further.

If the substance that splits off water under the influence of heat is arranged in at least one discrete layer within the fire protection means, the content of this relatively costly agent may be reduced to the necessary measure. Particularly good heat retention properties may moreover be obtained, for the substance that splits off water will indeed only be activated once the insulating effect of the mineral wool granulate layer placed in front of it is overcome.

Alternatively, however, it is also possible for the substance that splits off water under the influence of heat to be arranged in homogeneous distribution within the fire protection means, with this development having the advantage of implying less complexity in terms of manufacture.

It is moreover advantageous if the substance that splits off water under the influence of heat is a hydroxide and in particular an aluminum hydroxide. Under conditions of practical use, such hydroxides have been found to be very suitable for the purpose of the invention, with aluminum hydroxide presently being preferred among the metal hydroxides due to its availability, its pricing, and its properties.

The invention shall hereinbelow be explained in more detail by way of embodiments while referring to the figures of the drawing, wherein:
- Fig. 1: is a sectional view of a detail of a first embodiment of the inventive fire protection means during manufacture;
- Fig. 2: is a sectional view of a detail of a second embodiment of the inventive fire protection means during manufacture; and
- Fig. 3: shows an inventive fire protection means in accordance with a third embodiment, also during manufacture.

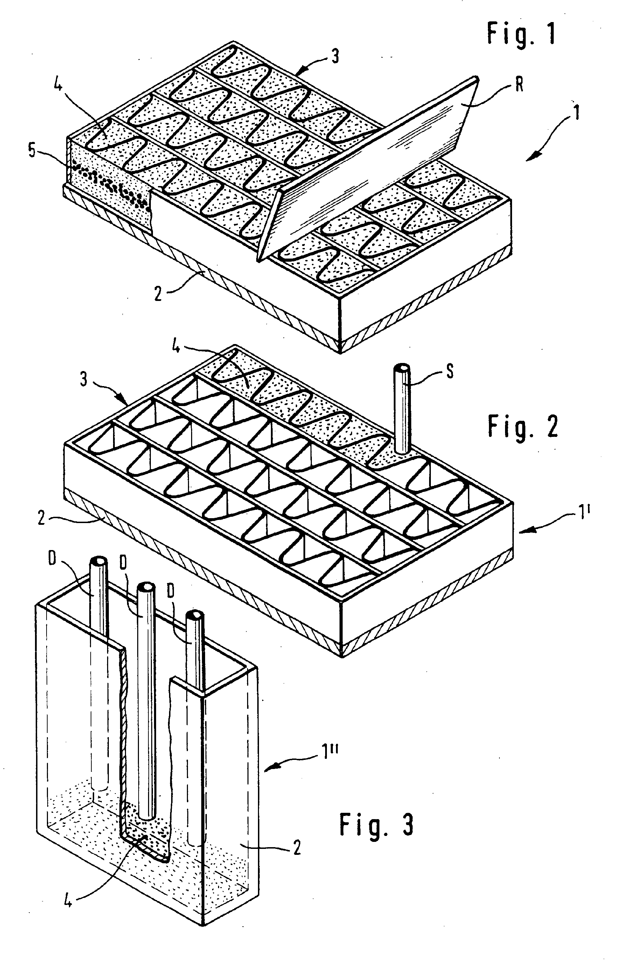

A first embodiment of a fire protection means 1 is shown in Fig. 1. This figure merely represents a detail of the fire protection means 1 that is essential for elucidating the invention.

The fire protection means 1 comprises a frame 2 of which only a cover panel is indicated in sectional view in Fig. 1. In a fireproof door the frame 2 is, for example, designed so as to completely encompass the lining that produces the fire protection effect, and is manufactured of sheets of metal. The fireproof lining of the fire protection means 1 has in accordance with the representation in Fig. 1 a honeycomb structure 3 formed of a fireproof and water-repellent paperboard. In the cavities of the honeycomb structure 3 there is moreover arranged mineral wool granulate 4; approximately in a central position within the granulate layer, in a plane parallel to the major surfaces of the fire protection means 1 that are of importance in terms of fire protection, there is additionally arranged a discrete layer of a substance 5 that splits off water under the influence of heat. The substance that splits off water is in this embodiment aluminum hydroxide and is also present in the form of a granulate.

Fig. 1 moreover schematically shows the process of manufacturing the fire protection means 1. Thus the honeycomb structure 3 is applied onto a panel of the frame 2, and subsequently a predetermined quantity of the mineral wool granulate 4 is introduced into the cavities of the honeycomb structure 3 with the aid of a doctor blade R. In a second step, also with the aid of the doctor blade R, the substance 5 that splits off water is applied on the already existing layer of mineral wool granulate 4 before another layer of mineral wool granulate 4 is arranged above the layer including the substance 5 that splits off water. Instead of, or supplementarily to the doctor blade R, it is also possible to employ brushes and/or a vibrator for introducing the particles 4 or 5 into the honeycomb structure 3. Moreover binder such as water glass, for example, may also additionally be introduced into the granulate 4 or added together with the substance 5 that splits off water in order to increase stability.

Once the honeycomb structure 3 is filled, the fire protection means 1 is completed by closing the frame 2.

Fig. 2 shows a fire protection means 1' in a modified embodiment wherein the substance that splits off water is homogeneously distributed in the mineral wool granulate 4. The substance that splits off water is not explicitly represented in Fig. 2. Furthermore the mineral wool granulate 4 is injected into the honeycomb structure 3 with the aid of a hose S. In order to obtain a sufficient strength of the layer formed by the granulate 4, water glass is additionally introduced as a binder. In the case of the fire protection means 1', as well, the frame 2 is closed subsequently to filling the honeycomb structure 3 to thereby complete the product.

Fig. 3 shows a fire protection means 1" in another modified embodiment where no honeycomb structure is used. Instead, the mineral wool granulate 4 including the substance that splits off water (not shown in Fig. 3) in homogeneous distribution is introduced into the frame 2 with the aid of at least one pressure filling pipe D (in the shown example with the aid of three pressure filling pipes D). Pressurized introduction of the mineral wool granulate 4 here makes it possible to avoid potential cavities in the granulate layer, so that the granulate 4 will settle down as little as possible over the course of time and/or under the influence of heat. To this end it is moreover possible to in turn jointly introduce water glass or the like into the granulate 4 as an additional binder. For filling the frame 2, the pressure filling pipes D are initially inserted into the frame 2 near the lower end thereof so as to ensure complete filling of this region. In the course of further filling, the pressure filling pipes D are then by and by withdrawn from the frame 2. Once the frame 2 is completely filled with granulate 4, it may be closed to thereby complete the fire protection means 1".

Apart from the presently shown embodiment, the invention allows for other development approaches.

Thus it is possible, for example, to also form in the honeycomb structure 3 a discrete layer of the substance 5 that splits off water under the influence of heat if the honeycomb structure 3 is filled with the aid of a hose S. Several discrete layers of the substance 5 may moreover be provided. On the other hand it is also possible to introduce into the honeycomb structure 3 a mineral wool granulate 4 homogeneously provided with the substance 5 that splits off water, if the honeycomb structure 3 is filled with the aid of a doctor blade R or brushes. In the same way it is also possible to perform pressurized filling on a honeycomb structure or to inject the mineral wool granulate 4 with the aid of a hose S into a frame 2 not having a honeycomb structure 3 provided therein.

Particularly in the case of the embodiment in accordance with Fig. 3 it would moreover also be possible to insert a plasterboard or the like into the frame 2 and line it on both sides with mineral wool granulate 4.

Moreover the invention may also be realized to particular advantage with fire protection means presenting a shape other than a parallelepiped, such as, e.g., a cylindrical or spherical shape and/or combinations of various geometries.

## Claims

1. A fire protection means (1; 1'; 1"), in particular a fireproof door, a wall element for a fire protection closet or the like, which includes a frame (2) and a lining of mineral wool received therein, and a substance (5) which splits off water under the influence of heat, **characterized by** the provision of the mineral wool in the form of granulate (4), and by the provision of a supporting structure and/or by the introduction of said mineral wool granulate (4) under pressure and/or by the introduction of additional binder into said mineral wool granulate (4), so as to counteract a displacement of said mineral wool granulate (4) settling in said frame (2) in accordance with gravity.

2. The fire protection means according to claim 1, **characterized in that** said supporting structure has the form of a honeycomb structure (3).

3. The fire protection means according to claim 2, **characterized in that** said honeycomb structure (3) is formed of a fireproof and water-repellent paperboard.

4. The fire protection means according to one of claims 1 to 3, **characterized in that** said additionally introduced binder is a non-flammable binder, such as preferably water glass, silica sol and/or magnesia binder.

5. The fire protection means according to one of claims 1 to 4, **characterized in that** said substance (5) which splits off water under the influence of heat is arranged in at least one discrete layer within said fire protection means (1).

6. The fire protection means according to one of claims 1 to 4, **characterized in that** said substance (5) which splits off water under the influence of heat is arranged in homogeneous distribution within said fire protection means (1'; 1").

7. The fire protection means according to one of claims 1 to 6, **characterized in that** said substance (5) which splits off water under the influence of heat is a hydroxide, in particular an aluminum hydroxide.
